# EUROPÄISCHE PATENTANMELDUNG

(11) **EP 1 096 345 A1**
(43) Veröffentlichungstag der Anmeldung: **02.05.2001**
(21) Anmeldenummer: 99121631.8
(22) Anmeldetag: 30.10.1999
(51) Int. Cl.: G05B 19/042

(54) **Vorrichtung zur einheitlichen Ansteuerung von Endgeräten**

(71) Anmelder: TLC Transport-, Informatik- u. Logistik-Consulting GmbH, 10179 Berlin (DE)
(72) Erfinder: Dreke, Detlef, D-63846 Laufach (DE); Strauss, Burkhardt, D-61267 Neu-Anspach (DE)
(74) Vertreter: Stenger, Watzke & Ring Patentanwälte

(57) **Zusammenfassung**

Die vorliegende Erfindung betrifft eine Vorrichtung zur einheitlichen Ansteuerung von Endgeräten, umfassend einen Mikroprozessor (2) mit einer Schnittstelle (7) zur physikalischen Steuerung von Endgeräten und mit einer Schnittstelle (3) zur bidirektionalen Kommunikation mit einem Bus-Controller (6) über einen ersten Bus (4), einen Bus-Controller (6) mit einer Schnittstelle (5) zur bidirektionalen Kommunikation mit dem Mikroprozessor (2) über den ersten Bus (4) und mit einer Schnittstelle (18) zur bidirektionalen Kommunikation über einen zweiten Bus (19, 20, 20a, 20b), und einen Adressendekodierer (22) mit einer Schnittstelle (23) zur Anbindung an den zweiten Bus (21, 20, 20a, 20b), welcher die Funktion des Bus-Controllers (6) steuert.

## Beschreibung

Die vorliegende Erfindung betrifft eine Vorrichtung zur einheitlichen Ansteuerung von Endgeräten, insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelementen, und dergleichen.

Bei gegebenen Infrastrukturen ist es derzeit der Normalfall, daß eine Vielzahl von Sensorik- und/oder Aktorikelementen einer Vielzahl von funktionsorientierten Vorrichtungen zugeordnet sind, wozu Beleuchtungssysteme, Klima-Belüftungssysteme, Schattierungseinheiten, Heizungssysteme, Kommunikationssysteme, Wasserführungs- und Pumpsysteme und dergleichen, gehören. Dabei ist es auch geläufig, daß nicht nur die jeweiligen Geräte selbst, sondern auch die dazugehörigen Sensorik- und/oder Aktorikelemente aus unterschiedlichen Beschaffungszeiträumen stammen, unterschiedlichen Generationen zugehören und über unterschiedlichste Schnittstellen und Ansprechverfahren verfügen.

Ein besonderer Anwendungsfall der vorliegenden Erfindung ist beispielsweise im Bereich von Bahnhofsanlagen gegeben, wo zur Information der Fahrgäste unterschiedliche optische und/oder akustische Informationsanlagen eingesetzt werden, wobei Endgeräte, wie Monitore, Lautsprecher, Fallblattanzeiger, Videotafeln und dergleichen, seitens dafür vorgesehener Steuereinrichtungen mit den entsprechenden Informationen versorgt und angesteuert werden.

Die Deutsche Bahn beispielsweise setzt in ihren Bahnhöfen derzeit noch Fahrgastinformationsanlagen (FIA) unterschiedlichster Hersteller ein, so daß nahezu jeder Bahnhof hinsichtlich der zum Einsatz kommenden Fahrgastinformationsanlagen einzigartig ist. Gleiches gilt für die in den Bahnhöfen zur Ansteuerung der Fahrgastinformationsanlagen und deren Endgeräte vorhandenen Steuereinrichtungen, die verschiedene Rechnersysteme und -netze umfassen und grundsätzlich den lokalen Gegebenheiten eines Bahnhofs angepaßt sind. Aufgrund dieser Umstände sind ein Austausch und die Versorgung mit Daten zur Fahr- bzw. Reisegastinformation zwischen einzelnen Bahnhöfen und zwischen einzelnen Endgeräten eines Bahnhofs in der Regel inkonsistent. Die hierbei für Fahrgastinformationen interessierenden Daten umfassen beispielsweise Fahrplandaten hinsichtlich Soll-, Ist- und Prognosedaten, die den Fahrgast beispielsweise hinsichtlich Zuglauf, Verspätung, Anschlußsituation und dergleichen informieren.

Standardisierungs- und Integrationsbestrebungen hinsichtlich einer Ansteuerung der in Bahnhofsanlagen eingesetzten Endgeräte von Informationsanlagen sind bisher gescheitert, da zum einen die Bahnhofsanlagen die Schnittstellen zwischen den Steuereinrichtungen und den angeschlossenen Endgeräten der Informationsanlagen nur proprietär zugänglich sind und zum anderen ein Austauschen der Informationsanlagen auch aus Kostengründen ausgeschlossen ist. So kann es mitunter vorkommen, daß ältere Endgeräte, die in den Bahnhofsanlagen noch vorhanden sind, an neuere Steuereinrichtung angeschlossen werden müssen. Problematisch ist dabei, daß in der Regel die Dokumentationen dieser Endgeräte aufgrund deren Alters nicht mehr vorhanden sind und daher die Ansteuerung zur Integration dieser Endgeräte erschwert und teilweise ganz unmöglich ist.

In Anbetracht dieses Standes der Technik liegt der vorliegenden Erfindung die **Aufgabe** zugrunde, eine Vorrichtung zur Ansteuerung von Endgeräten der eingangs genannten Art bereitzustellen, welche Endgeräte verschiedenster Art und Hersteller untereinander nahezu beliebig miteinander austauschbar und einheitlich steuerbar macht.

Die Aufgabe wird erfindungsgemäß **gelöst** durch eine Vorrichtung zur einheitlichen Ansteuerung von Endgeräten, insbesondere von vorzugsweise im Bereich von Bahnhofsanlagen einsetzbaren optischen und/oder akustischen Informationsanlagen, umfassend Monitore, Kameras, Lautsprecher, Fallblattanzeiger, Sensorik- und/oder Aktorikelemente, und dergleichen, wobei die Vorrichtung einen Mikroprozessor mit einer Schnittstelle zur physikalischen Steuerung von Endgeräten und mit einer Schnittstelle zur bidirektionalen Kommunikation mit einem Bus-Controller über einen ersten Bus, einen Bus-Controller mit einer Schnittstelle zur bidirektionalen Kommunikation mit dem Mikroprozessor über den ersten Bus und mit einer Schnittstelle zur bidirektionalen Kommunikation über einen zweiten Bus, und einen Adressendekodierer mit einer Schnittstelle zur Anbindung an den zweiten Bus, welcher die Funktion des Bus-Controllers steuert, umfaßt.

Die erfindungsgemäße Vorrichtung erlaubt durch Verwendung des Mikroprozessors über die Schnittstelle des Mikroprozessors eine physikalische Ansteuerung von Endgeräten unterschiedlichster Art und Hersteller. Über die Schnittstelle zur bidirektionalen Kommunikation mit dem Bus-Controller über den ersten Bus kann der Mikroprozessor mit einer Steuereinrichtung, welche mit dem Mikroprozessor über den Bus-Controller über den zweiten Bus verbindbar ist, Daten austauschen, insbesondere Steuer- und Zustandsdaten. Seitens der Steuereinrichtung erfolgt dabei eine logische Ansteuerung der Endgeräte auf einer abstrakten Ebene, welche seitens des Mikroprozessors in eine physikalische Ansteuerung entsprechend angeschlossener Endgeräte umgesetzt wird. Gemäß einer vorteilhaften Ausgestaltung der Erfindung spricht die Schnittstelle zur physikalischen Steuerung der Endgeräte ein LON-Netzwerk an. Die erfindungsgemäße Vorrichtung schafft damit eine Entflechtung der Komplexität der Ansteuerung von Endgeräten. Seitens der Steuereinrichtung ist nur noch die logische Funktionalität von Endgeräten zu berücksichtigen, seitens der Endgeräte durch Verwendung der erfindungsgemäßen Vorrichtung nur noch die physikalische Ansteuerung.

Vorteilhafterweise ist der Mikroprozessor ein Neuron 3150, vorzugsweise ein MC143150 der Firma Motorola. Dieser stellt vorteilhafterweise als Schnittstelle zur physikalischen Ansteuerung von Endgeräten einen LON-Bus zur Verfügung und erlaubt so eine überaus einfache und standardisierte Ansteuerung von Endgeräten über weitere als Schnittstellen eingesetzte Mikroprozessoren, wie UART (Universal Asynchron Receiver Transmitter) für RS485 und/oder RS232, AD/DA-Wandler, digitale Ein-Ausgänge und dergleichen. Diese lassen sich vorteilhafterweise besonders einfach über den LON-Bus des Neuron 3150 ansteuern.

Der Mikroprozessor ist vorteilhafterweise über einen l2C-Bus bidirektional mit dem Bus-Controller verbunden. Der l2C-Bus erlaubt dem Mikroprozessor bzw. dem Bus-Controller ein Lesen und Schreiben von Daten über den Bus, welche seitens des Mikroprozessors zur Steuerung von Endgeräten und seitens des Bus-Controllers zur Weiterleitung an eine Steuereinrichtung verwendet werden, wobei seitens des Bus-Controllers der zweite Bus benutzt wird, welcher vorteilhafterweise ein ISA-Bus ist. Die Verwendung eines ISA-Bussystems ermöglicht es, die erfindungsgemäße Vorrichtung an ein herkömmliches Rechnernetzwerk anzuschließen und Rechner (PC's) als Steuereinrichtung zu verwenden, wobei auf dem als Steuereinrichtung dienenden Rechner ein Programm läuft, welches seitens der Steuereinrichtung eine rein logische Ansteuerung von Endgeräten bereitstellt, beispielsweise über eine grafische Benutzeroberfläche auf dem Bildschirm des Rechners, welche eine Ansteuerung von Endgeräten "per Mausklick" ermöglicht. Gemäß einer Ausgestaltung der Erfindung wird als Bus-Controller ein PCF8584 der Firma Philipps verwendet.

Gemäß einer besonders vorteilhaften Ausgestaltung der Erfindung ist diese als PC-Steckkarte ausgebildet, vorzugsweise im PC104-Format. Dies ermöglicht es, die erfindungsgemäße Vorrichtung zur Ansteuerung von Endgeräten direkt in einen Rechner einzustecken und dabei das seitens des Rechners zur Verfügung gestellte Bussystem, in der Regel ein ISA-Bus, zu nutzen.

In einer weiteren besonders vorteilhaften Ausgestaltung der Erfindung ist diese als Bus-Treiber verwendbar. Dazu wird die erfindungsgemäße Vorrichtung vorteilhafterweise als Steckkarte in das Bussystem eines Rechners eingesetzt und der Mikroprozessor softwaretechnisch, beispielsweise durch Änderung seines EEPROM, dahingehend eingesetzt, daß die erfindungsgemäße Vorrichtung dem Rechner eine Anpassung vom ISA-Bus auf den ersten Bus des Mikroprozessors, d. h. vorteilhafterweise auf den LON-Bus bereitstellt. Seitens der Endgeräte wird dann die erfindungsgemäße Vorrichtung zur physikalischen Ansteuerung der Endgeräte verwendet, wobei die erfindungsgemäße Vorrichtung seitens des Rechners die erfindungsgemäße Vorrichtung seitens der Endgeräte über den ersten Bus, d. h. miteinander verbunden sind. Die seitens des Rechners, d. h. der Steuereinrichtung, verwendete erfindungsgemäße Vorrichtung dient diesem somit als Bus-Treiber.

Zur Adressierung wird vorteilhafterweise als Adressendekodierer ein 8-Bit-Komprator verwendet, vorzugsweise ein 74HCT688. Vorteilhafterweise wird dabei der Chip-Select-Eingang des Bus-Controllers von dem Adressendekodierer aktiviert. So kann sichergestellt werden, daß die Datenkommunikation zwischen dem Mikroprozessor, dem Bus-Controller und einer über den zweiten Bus mit dem Bus-Controller verbundenen Steuereinrichtung kontrolliert und fehlerfrei abläuft.

Eine wesentliche Eigenschaft der erfindungsgemäßen Vorrichtung besteht dabei darin, daß diese - lediglich durch Austausch der Software im Mikroprozessor (Neuron) in zwei unterschiedlichen Betriebsarten eingesetzt werden kann. Diese Eigenschaft ist bisher bei anderen gattungsgemäßen Vorrichtung nicht gegeben.

In der einen Betriebsart kann die erfindungsgemäße Vorrichtung direkt auf den Logikteil einer PCT-Steckkarte, vorzugsweise einer PC104-Steckkarte aufgesteckt werden und die Aufgabe der Kopplung an den Logikteil des ISA-Bus oder eines anderen Kommunikationssystems, Konvertierung der Daten und Ansteuerung des anzusteuernden Endgerätes über diverse Schnittstellen wie digital I/O, analog I/O oder RS485/RS232 übernehmen. Dabei werden die Daten seitens einer Steuereinrichtung direkt, in der Regel über TCP/IP über Ethernet bis an die Vorrichtung - konkret den Logikteil der PC104-Steckkarte mit Ethernetadapter im Endgerät geführt.

In der zweiten Betriebsart kann die erfindungsgemäße Vorrichtung als Netzwerkadapter - quasi wie ein Ethernetadapter - verwendet werden. Dabei wird die erfindungsgemäße Vorrichtung einmal direkt auf den Logikteil einer PC104-Steckkarte aufgesteckt und übernimmt die Aufgabe der Kopplung an den Logikteil des ISA-Bus oder eines anderen Kommunikationssystems und die gesicherte Übertragung über das LON-Netzwerk der endgeräteseitig üblicherweise vorhandenen Verkabelung. Darüber hinaus wird eine erfindungsgemäße Vorrichtung bei dieser zweiten Betriebsart im Endgerät eingesetzt, wo diese die Aufgabe übernimmt, über den LON-Bus Daten zu empfangen, die Daten zu konvertieren und die Ansteuerung des anzusteuernden Endgerätes über diverse Schnittstellen wie digital I/O, analog I/O oder RS485/RS232.

Weitere Einzelheiten, Merkmale und Vorteile der Erfindung werden nachfolgend anhand des in den Figuren dargestellten Ausführungsbeispiels näher erläutert. Dabei zeigen:
- Fig. 1: die prinzipielle Anordnung der verschiedenen Baugruppen der erfindungsgemäßen Ansteuervorrichtung sowie deren strukturellen und funktionalen Verbindungen;
- Fig. 2: einen ersten Teil des Layouts der erfindungsgemäßen Ansteuervorrichtung und
- Fig. 3a, 3b: einen zweiten Teil des Layouts der erfindungsgemäßen Ansteuervorrichtung.

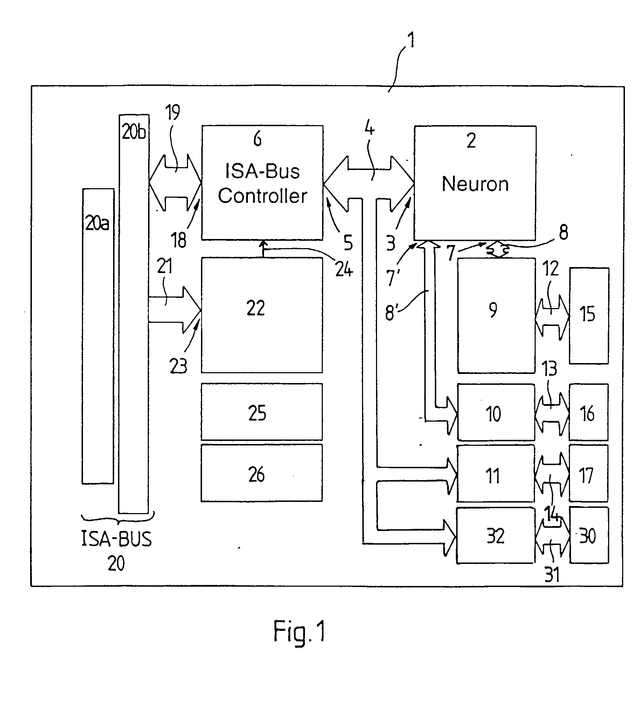

Fig. 1 zeigt in einer Übersicht die prinzipielle Anordnung der verschiedenen Baugruppen bzw. Komponenten der Ansteuervorrichtung 1, welche vorliegend als PC104-Steckkarte ausgebildet ist. Die Ansteuervorrichtung 1 weist einen Mikroprozessor 2, vorliegend einen Neuron 3150 auf, welcher über eine Schnittstelle 3 über ein Bussystem 4 bidirektional mit der Schnittstelle 5 eines Bus-Controllers 6 verbunden ist. Das Bussystem 4 ist dabei vorliegend ein 12C-Bus. Weiter weist der Mikroprozessor 2 eine Schnittstelle 7 bzw. 7' auf, welche zur physikalischen Steuerung von Endgeräten an ein Bussystem 8 bzw. 8', vorliegend ein LON-Bus bzw. SPI-Bus, angeschlossen ist, welcher in bidirektionaler Verbindung mit Schnittstellenbaugruppen 9 und 10 steht, welche über entsprechende Bussysteme 13 und analoge Signalleitungen 14 unterschiedliche Schnittstellen 15, 16 und 17 zur direkten physikalischen Anbindung von Endgeräten, mitunter über hier nicht dargestellte Leitungen, ansteuern. Der Bus-Controller 6 ist über eine weitere Schnittstelle 18 über ein Bussystem 19 bidirektional mit einem Bussystemanschluß 20 verbunden, wobei das Bussystem 19 und der Bussystemanschluß 20 vorliegend als ISA-Bus ausgebildet sind. Der Bussystemanschluß 20 umfaßt dabei einen AT-Bus 20a und einen XT-Bus 20b. An den Bussystemanschluß 20 ist über ein Bussystem 21 ein Adressendekodierer 22 über eine entsprechende Schnittstelle 23 angeschlossen. Der Adressendekodierer 22 überprüft dabei, ob eine seitens einer hier nicht dargestellten Steuereinrichtung über den Bussystemanschluß 20 angesprochene Adressierung der Ansteuervorrichtung 1 gegeben ist und aktiviert über die in Fig. 1 mit 24 gekennzeichnete Verbindung, einem sogenannten Chip-Select, den Bus-Controller 6, so daß der Mikroprozessor 2 über das Bussystem 4, den Bus-Controller 6 und das Bussystem 19 Daten mit einer Steuereinrichtung austauschen kann, die seitens des Mikroprozessors über das Bussystem 8 bzw. 8' die Schnittstellenbaugruppen 9 oder 10, den Bussystemen 12 oder analogen Signalleitungen 14 und den Schnittstellen 15 oder 17 an die Endgeräte zur physikalischen Ansteuerung derselben übertragen bzw. über das Bussystem 4 und die Schnittstellenbaugruppen 11 und 32, den Bussystemen 14 und 31 und den Schnittstellen 17 und 30 werden. Fig. 1 zeigt desweiteren Baugruppen 25 und 26, welche zur Adressierung und Einstellung der Übertragungskanäle auf den Bussystemen 19 bzw. 20 Verwendung finden.

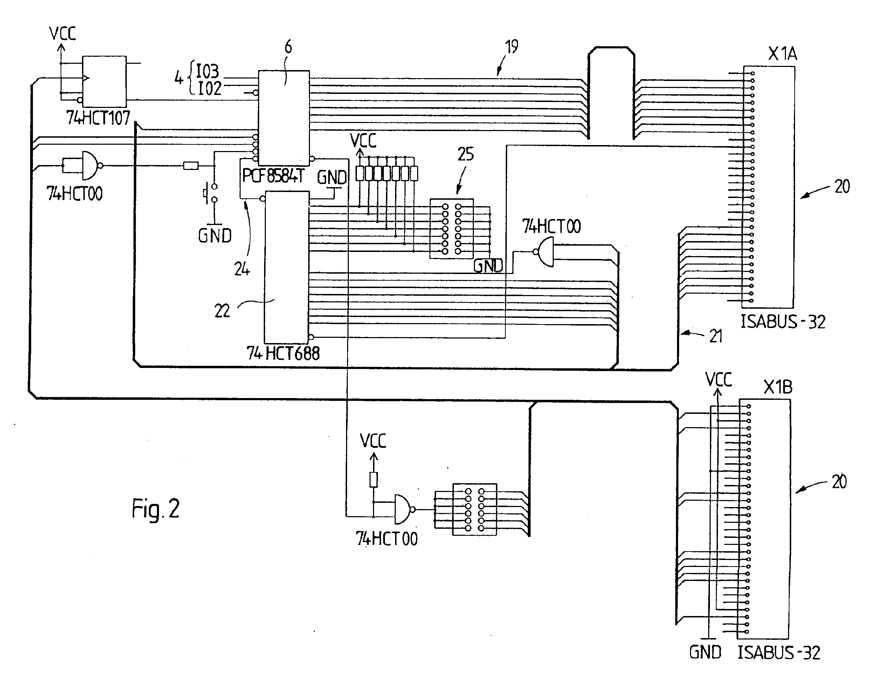

Fig. 2 zeigt einen Teil des Layouts der Ansteuervorrichtung 1 gemäß Fig. 1, wobei verschiedene Treiberstufen und Verbindungsleitungen nicht explizit dargestellt sind. Wie anhand Fig. 2 zu erkennen, handelt es sich bei dem Adressendekodierer 22 um einen 8-Bit-Komperator vom Typ 74HCT688, wobei über die mit 25 gekennzeichnete Baugruppe bei entsprechender Einstellung, sogenannte Jumper-Stellung, eine 8-Bit-Adresse für die Ansteuervorrichtung 1 vorgebbar ist, welche bei entsprechender Adressierung seitens des ISA-Bussystems 21 den Chip-Select 24 des ISA-Bus-Controllers 6, vorliegend vom Typ PCF 8584T, aktiviert und einen bidirektionalen Datenaustausch über den Bussystemanschluß 20 seitens einer hier nicht dargestellten Steuereinrichtung auf den 12C-Bus 4 damit zum Mikroprozessor 2 ermöglicht.

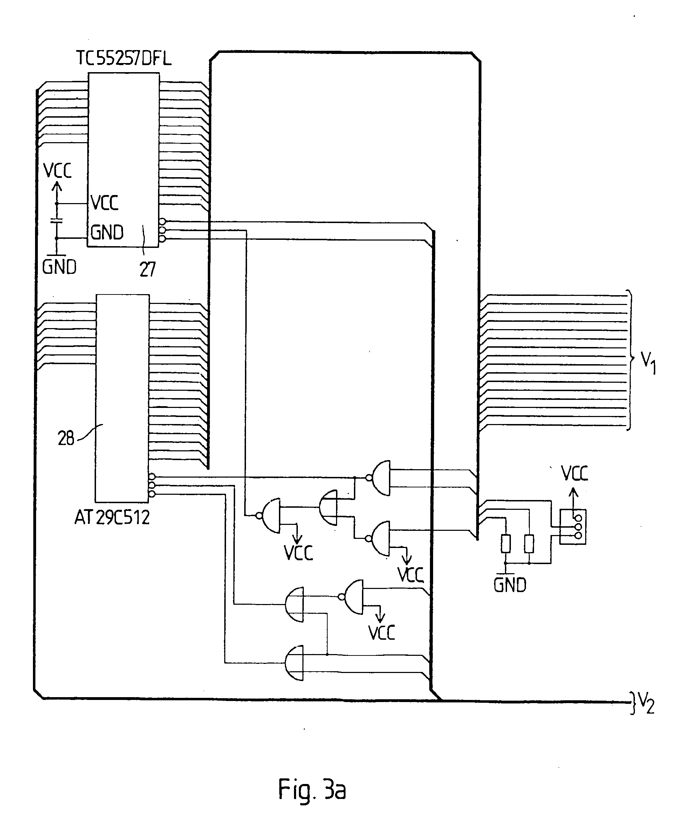

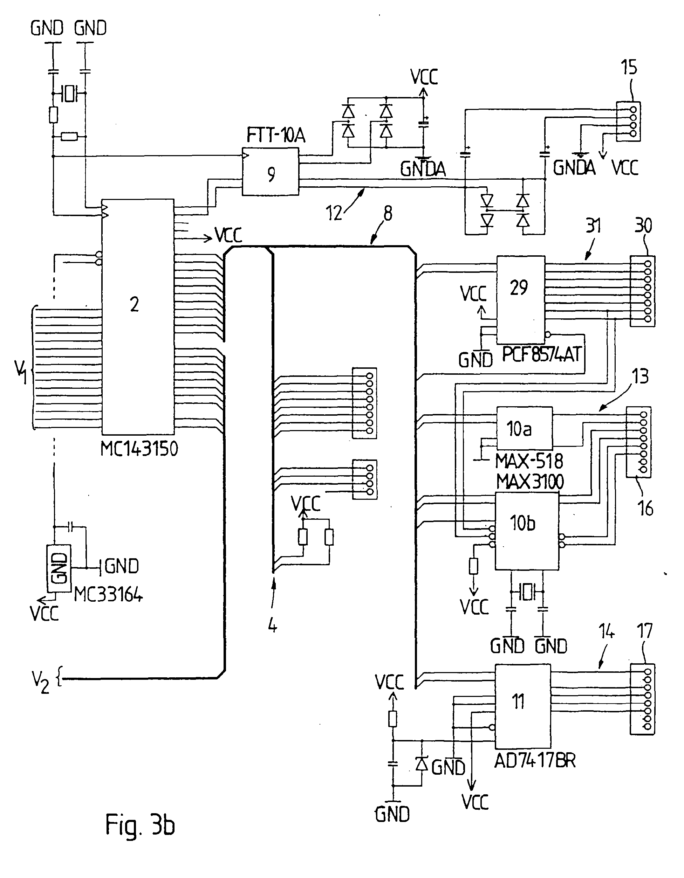

Fig. 3a und 3b zeigen einen weiteren Teil des Layouts der Ansteuervorrichtung 1. Dabei sind die in den Fig. 3a und 3b mit V1 und V2 gekennzeichneten Leitungen miteinander verbunden. Fig. 3b zeigt den Mikroprozessor 2, welcher über das 12C-Bussystem 4 mit dem ISA-Bus-Controller 6 bidirektional verbunden ist. Der Mikroprozessor 2, vorliegend ein Neuron 3150 vom Typ MC143150 der Firma Motorola ist über die mit V1 gekennzeichneten Leitungen mit den in Fig. 3a dargestellten Speicherbausteinen 27 und 28 verbunden. Dabei handelt es sich bei dem Speicherbaustein 27 um ein RAM und bei dem Speicherbaustein um ein Flash-EPROM. Wie in Fig. 3b weiter zu erkennen, ist der Mikroprozessor 2 über verschiedene Signalleitungen 8, vorliegend ein SPI-Bus, eine 12C-Bus und ein LON-Bus, mit verschiedenen Schnittstellenbaugruppen 9, 10, d. h. 10a und 10b, 11 und 29 verbunden, welche über die Bussysteme 12, 13, 14 und 31 die Schnittstellen 15 ,16, 17 und 30, welche zur direkten physikalischen Ansteuerung von Endgeräten vorgesehen sind, ansteuern. Bei der Schnittstellenbaugruppe 9 handelt es sich um einen sogenannten Free Topology Transceiver der über das Bussystem 12 und die Schnittstelle 15 einen LON-Bus bereitstellt. Bei der Schnittstellenbaugruppe 29, vorliegend ein PCF8574AT handelt es sich um einen sogenannten I/O-Expander, der über das Bussystem 31 und die Schnittstelle 30 verschiedene digitale Ein- und Ausgänge bereitstellt. Die Schnittstellenbaugruppe 10, ein sogenannter Universal Asynchron Receiver Transmitter (UART) stellt über die beiden Schnittstellenbausteine 10a, vorliegend ein MAX-518, und 10b, vorliegend ein MAX-3100, über das Bussystem 13 und die Schnittstelle 16 einen RS232- bzw. RS485-Anschluß für Endgeräte bereit. Bei der Schnittstellenbaugruppe 11 handelt es sich um eine AD/DA-Wandler, vorliegend vom Typ AD7417BR, welcher über das Bussystem 14 und die Schnittstelle 17 einen Anschluß von Endgeräten an die Ansteuervorrichtung 1 ermöglicht.

### Bezugszeichenliste

- 1: Ansteuervorrichtung
- 2: Mikroprozessor
- 3: Schnittstelle
- 4: Bussystem (l2C-Bus) 2
- 5: Schnittstelle
- 6: Bus-Controller
- 7: Schnittstelle
- 8: Bussystem/Signalleitungen (LON-Bus)
- 8': Bussystem (SPI-Bus)
- 9: Schnittstellenbaugruppe
- 10: Schnittstellenbaugruppe
- 10a: Schnittstellenbaugruppe
- 10b: Schnittstellenbaugruppe
- 11: Schnittstellenbaugruppe/AD/DA-Wandler
- 12: Bussystem
- 13: Serielle Schnittstelle
- 14: Signalleitungen analog
- 15: Schnittstelle
- 16: Schnittstelle
- 17: Schnittstelle
- 18: Schnittstelle
- 19: Bussystem
- 20: Bussystemanschluß
- 20a: AT-Bus
- 20b: XT-Bus
- 21: Bussystem
- 22: Adressendekodierer
- 23: Schnittstelle
- 24: Chip-Select
- 25: Baugruppe
- 26: Baugruppe
- 27: Speicherbaustein
- 28: Speicherbaustein
- 29: Schnittstellenbaugruppe
- 30: Schnittstelle
- 31: Signalleitungen digital
- 32: Schnittstellenbaugruppe/ digital I/O

## Patentansprüche

1. Vorrichtung zur einheitlichen Ansteuerung von Endgeräten, umfassend einen Mikroprozessor (2) mit einer Schnittstelle (7) zur physikalischen Steuerung von Endgeräten und mit einer Schnittstelle (3) zur bidirektionalen Kommunikation mit einem Bus-Controller (6) über einen ersten Bus (4), einen Bus-Controller (6) mit einer Schnittstelle (5) zur bidirektionalen Kommunikation mit dem Mikroprozessor (2) über den ersten Bus (4) und mit einer Schnittstelle (18) zur bidirektionalen Kommunikation über einen zweiten Bus (19, 20, 20a, 20b), und einen Adressendekodierer (22) mit einer Schnittstelle (23) zur Anbindung an den zweiten Bus (21, 20, 20a, 20b), welcher die Funktion des Bus-Controllers (6) steuert.

2. Vorrichtung nach Anspruch 1, dadurch gekennzeichnet, daß der Mikroprozessor (2) ein Neuron 3150, vorzugsweise ein MC143150 der Firma Motorola ist.

3. Vorrichtung nach Anspruch 1 oder Anspruch 2, dadurch gekennzeichnet, daß der Bus-Controller (6) ein PCF8584 der Firma Philips ist.

4. Vorrichtung nach einem der Ansprüche 1 bis 3, dadurch gekennzeichnet, daß der Adressendekodierer (22) ein 8-Bit-Komperator ist, vorzugsweise ein 74HCT688.

5. Vorrichtung nach einem der Ansprüche 1 bis 4, dadurch gekennzeichnet, daß der Adressendekodierer (22) den Chip-Select (24) des Bus-Controllers (6) aktiviert.

6. Vorrichtung nach einem der Ansprüche 1 bis 5, dadurch gekennzeichnet, daß die Schnittstelle (7) zur physikalischen Steuerung der Endgeräte ein LON-Netzwerk (8) anspricht.

7. Vorrichtung nach einem der Ansprüche 1 bis 6, dadurch gekennzeichnet, daß die physikalische Steuerung der Endgeräte über einen AD/DA-Wandler erfolgt, vorzugsweise über einen AD7417BR.

8. Vorrichtung nach einem der Ansprüche 1 bis 7, dadurch gekennzeichnet, daß die physikalische Steuerung der Endgeräte über einen Universal Asynchron Receiver Transmitter erfolgt, vorzugsweise über einen MAX-518 entsprechend RS485 bzw. MAX-3100, entsprechend RS232.

9. Vorrichtung nach einem der Ansprüche 1 bis 8, dadurch gekennzeichnet, daß die physikalische Steuerung der Endgeräte über einen LON-Bus erfolgt.

10.Vorrichtung nach einem der Ansprüche 1 bis 9, dadurch gekennzeichnet, daß der erste Bus (4) ein l2C-Bus ist.

11.Vorrichtung nach einem der Ansprüche 1 bis 10, dadurch gekennzeichnet, daß der zweite Bus (19, 20, 20a, 20b, 21) ein ISA-Bus ist.

12. Vorrichtung nach einem der Ansprüche 1 bis 11, dadurch gekennzeichnet, daß diese als Bus-Treiber einsetzbar ist.

13. Vorrichtung nach einem der Ansprüche 1 bis 12, dadurch gekennzeichnet, daß diese als Steckkarte, vorzugsweise im PC1 04-Format ausgebildet ist.
